(19) Europäisches Patentamt

European Patent Office

Office européen des brevets

(11) **EP 0 688 081 B1**

(12) **EUROPÄISCHE PATENTSCHRIFT**

(45) Veröffentlichungstag und Bekanntmachung des Hinweises auf die Patenterteilung:
**30.01.2002   Patentblatt 2002/05**

(51) Int Cl.⁷: **H02J 3/36**, H02M 1/084,
H02M 5/451, G05F 1/66

(21) Anmeldenummer: **95108441.7**

(22) Anmeldetag: **01.06.1995**

(54) **Verfahren und Anordnung zur Gleichstromübertragung**

Method and arrangement for a d.c. transmission

Méthode et arrangement pour une transmission en courant continu

(84) Benannte Vertragsstaaten:
**DE GB SE**

(30) Priorität: **13.06.1994   DE 4420600**

(43) Veröffentlichungstag der Anmeldung:
**20.12.1995   Patentblatt 1995/51**

(73) Patentinhaber: **SIEMENS AKTIENGESELLSCHAFT
80333 München (DE)**

(72) Erfinder: **Karlecik-Maier, Franz, Dipl.-Ing,
D-91315 Höchstadt, Aisch (DE)**

(56) Entgegenhaltungen:
**EP-A- 0 129 250          EP-A- 0 367 247
CH-A- 661 384          DE-A- 2 901 263**

## Beschreibung

Die Erfindung betrifft ein Verfahren zum Betrieb einer Hochspannungsgleichstromübertragung (HGÜ).

Zum Übertragen elektrischer Energie zwischen zwei Wechselspannungsnetzen wird in bestimmten Anwendungsfällen von der Hochspannungsgleichstromübertragung (HGÜ) Gebrauch gemacht. Für den Betrieb der Gleich- und Wechselrichter einer HGÜ werden unterschiedliche Regelverfahren verwendet. Ein Beispiel hierfür ist das sogenannte Marginalstromverfahren (DE 29 01 263 A1). Hierbei weisen Gleichrichter und Wechselrichter jeweils einen Stromregler auf, deren Kennlinien um einen "Marginalstrom" voneinander versetzt sind. Beide Stromrichter können auch einen Spannungsregler aufweisen. Auf diese Weise ist jedem Stromrichter eine genau definierte Arbeitskennlinie zugeordnet, welche einen Strom- und Spannungsast aufweist. Der Schnittpunkt der jeweiligen Arbeitskennlinien ergibt dann im Betrieb den Arbeitspunkt der Gesamtanordnung. Je nach momentaner Betriebssituation ist bei einer derartigen Anordnung immer nur ein Regler (Strom oder Spannung), gegebenenfalls über eine Minimum- oder Maximumauswahl, aktiv.

Derartige Regelanordnungen weisen eine hierarchische Regelstruktur auf. Das heißt, daß zumindest für den Gleichrichter ausgehend von einem übergeordneten Leistungsregeler oder einer leistungsregelerähnlichen Schaltung ein unterlagerter Strom- oder Spannungsregler vorgesehen ist, bei dem aus der vorgegebenen Solleistung und der Istleistung ein Strom- oder Spannungssollwert ermittelt wird. Derartige Regelanordnungen weisen hierarchiebedingte Nachteile auf, die sich aus den Reaktionszeiten des Leistung- und des Stromreglers ergeben (Zeitverhältnis ca. 10: 1). Daraus können sich im quasi-stationären Betrieb folgende nachteilige Situationen ergeben: Im Fall des Spannungseinbruchs mit unverändertem Leistungsistwert aber verändertem Stromistwert verändert die Regelung verhältnismäßig stark die übertragene Leistung und benötigt sehr lange bis der stationäre Arbeitspunkt erreicht wird.

Im Fall des Spannungseinbruchs mit verändertem Leistungsistwert verschlechtert sich das Regelverhalten nochmals.

Im Fall des Spannungseinbruchs mit veränderten Istwerten arbeiten die Regelungen am Gleich- und Wechselrichter jede für sich, ohne Berücksichtigung der Gegenseite, zum gleichen Arbeitspunkt hin.

Die vorhandene Regelstruktur reagiert verhältnismäßig stark und unkoordiniert auf äußere Störungen. Wenn die angeschlossenen Netze, die Gleichstromleitung oder das ganze System die Reglerreaktionen verstärken, führt dies zu Instabilitäten, ungedämpften Schwingungen und zusätzlichen Übertragungsverlusten.

Es wurde bereits vorgeschlagen, zur Verbesserung des Regelverhaltens sogenannte Vektorregler zu verwenden (EP 0 689 729 A1, EP 0 689 732 A1). Bei diesen Verfahren zum Erzeugen von Steuersignalen für Steuereinrichtungen von Stromrichtern einer HGÜ-Anlage werden in Abhängigkeit ermittelter Spannungs- und Strom-Istwerten (Ua, Ub, Ia, Ib) und in Abhängigkeit ermittelter Spannungs- und Strom-Sollwerten (Usa, Usb, Isa, Isb) derart jeweils Steuersignale generiert, daß für den gleichrichterbetriebenen Stromrichter die Bedingung:

$$Usa - Ua + Isa - Ia = 0$$

Und für den wechselrichterbetriebenen Stromrichter die Bedingung:

$$-Usb + Ub + Isb - Ib = 0$$

erfüllt wird.

- Auch diese Regelverfahren verwenden am Gleichrichter noch eine hierarchische Reglerstruktur mit überlagertem Leistungsregler. Der Leistungsregler erhält dabei die Differenz zwischen Soll- und Istleistung als Eingangsgröße.

Der Erfindung zielt darauf ab, die bereits vorgeschlagenen Verfahren derart zu modifizieren, daß ein verbessertes Verhalten mit verkürzten Reaktionszeiten in Fehlersituationen und bei Störungen um den Betriebspunkt gegeben ist.

Dieses Ziel wird dadurch erreicht, daß in Abhängigkeit eines gemessenen Gleichspannungs-Istwertes (Ua) des gleichrichterbetriebenen Stromrichters mittels einer bekannten spannungsabhängigen Strombegrenzungskennlinie ein Strom-Sollwert (Isa) bestimmt wird, daß in Abhängigkeit dieses ermittelten Strom-Sollwertes (Isa) und einer zweiten Kennlinie ein Spannungs-Sollwert (Usa) ermittelt wird, wobei diese zweite Kennlinie derart ausgebildet ist, daß ausgehend von einer zu übertragenen konstanten Leistung die Summe der Strom- und Spannungsabweichungen gleich Null ist, und daß ausgehend von einer zu übertragenen konstanten Leistung in Abhängigkeit eines gemessenen Gleichspannungs-Istwertes (Ub) des wechselrichterbetriebenen Stromrichters, eines Soll- und Ist-Löschwinkels und der beiden Kennlinien ein Strom- und Spannungs-Sollwert (Isb, Usb) ermittelt werden, wobei diese beiden Kennlinien nun einstellbare Äste aufweisen.

Auf diese Weise arbeiten die Stromrichter nunmehr koordiniert miteinander. Die Abstimmung erfolgt dabei über die Solleistung und den an der Gleichstromverbindung zur Verfügung stehenden Meßwerten. Die Stromrichter beeinflussen im Betrieb direkt die Spannung. Dadurch wird indirekt der Strom verändert. Es wird daher bevorzugt die Spannung als variable Größe für das Sollwertepaar verwendet.

Die Arbeitskennlinien der Stromrichter sind im Bereich des stationären Arbeitspunktes derart vorgegeben, daß eine Behinderung der Stromrichter gegenseitig in ihrem Verhalten nicht stattfindet. Die Regelung des Gleichrichters weist eine Kennlinie mit einer negativen Steigung auf, die der Hyperbel der vorgegebenen Leistung entspricht. Die Regelung des Wechselrichters weist eine Kennlinie auf, die einer Widerstandskennlinie entspricht und eine positive Steigung aufweist. Durch diese Ausbildung der beiden Kennlinien ist ein stabiler Arbeitspunkt gegeben.

Ein aktiver Eingriff einer der Regelungen erfolgt dabei nur, wenn die jeweilige Arbeitskennlinie verlassen wird. Verändert ein Stromrichter seinen Steuerwinkel $\alpha$ derart, daß ein neuer Arbeitspunkt erzielt wird, welcher noch immer auf der Kennlinie des jeweils anderen Stromrichters liegt, so hat der andere Stromrichter keine Veranlassung seine Arbeitskennlinie zu verlassen. Es ist also für diesen kein Regeleingriff erforderlich. Es kann hierbei quasi von einer Entkopplung der Regelkreise gesprochen werden. Die jeweiligen Regeleinrichtungen arbeiten zwar völlig eigenständig auf den gemeinsamen Arbeitspunkt bei Änderungen hin, berücksichtigen jedoch dabei das Verhalten der Gegenseite. Dies erfolgt ohne die bisher üblichen hierarchischen Regelkonzepte, bei denen über- und unterlagerte Regler mit verschiedenen gegenseitig beeinflussenden Regelverhalten eingesetzt wurden.

Mit Vorteil können außerhalb des Bereichs um den stationären Arbeitspunkt die Spannungs- und Strom-Sollwerte für den Gleichrichter und für den Wechselrichter der HGÜ-Anlage einer Spannungs- und/oder Strombegrenzung, insbesondere einer spannungsabhängigen Strombegrenzung, unterzogen werden. Damit können nichtstationäre Betriebszustände, z. B. beim Anfahren oder bei Fehlern, vorteilhaft ausgeregelt werden. Die Begrenzungen sind beispiels-weise als VDCL (Voltage Dependent Current Limitation) oder als VDVOC (Voltage Dependent Voltage Order Charakteristik) ausgebildet.

Die Erfindung und weitere Vorteile werden nachfolgend anhand eines Ausführungsbeispiels näher erläutert. Es zeigen:

FIG 1 eine HGÜ mit zugehörigen Regeleinrichtungen und
FIG 2 ein Diagramm der Arbeitskennlinien hierzu.

Die nachfolgend verwendeten Abkürzungen und Bezugszeichen sind am Ende dieser Beschreibung in einer Tabelle aufgeführt.

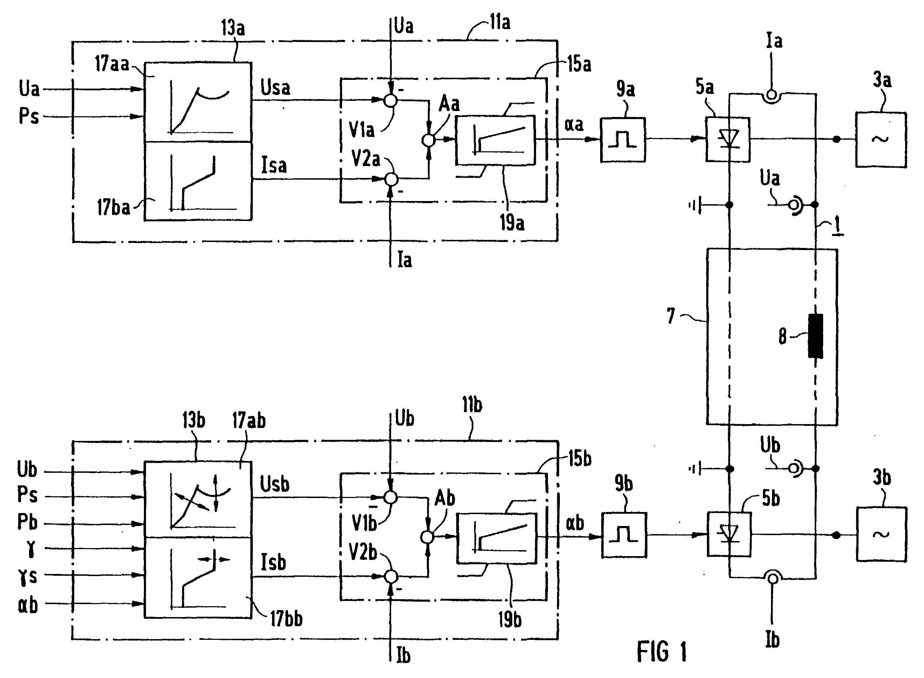

In FIG 1 ist eine Hochspannungsgleichstromübertragungsanlage (HGÜ) 1 gezeigt, mit deren Hilfe zwei Wechselspannungsnetze 3a,3b miteinander verbunden sind. Die HGÜ 1 umfaßt als Stromrichter einen Gleichrichter 5a und einen Wechselrichter 5b, die einerseits jeweils einem der Wechselspannungsnetze 3a bzw. 3b zugeordnet und andererseits gleichstromseitig über eine Gleichstromleitung 7 miteinander verbunden sind. Die Gleichstromleitung 7 ist schematisch mit einer Leitungsinduktivität 8 dargestellt.

Die HGÜ 1 umfaßt des weiteren nicht näher bezeichnete Meßfühler zur Aufnahme von Strom- und Spannungswerten Ia, Ib, bzw. Ua,Ub. Dem Gleichrichter 5a und dem Wechselrichter 5b sind jeweils eine Steuereinrichtung 9a,9b zur Ansteuerung ihrer Ventile oder Halbleiter vorgeschaltet.

Die Steuereinrichtung 9a des Gleichrichters 5a erhält ein Steuersignal $\alpha$a, das von einer ersten Regelanordnung 11a erzeugt wird. Die erste Regelanordnung 11a umfaßt im wesentlichen einen ersten Sollwertgeber 13a und eine erste Vekorregleranordnung 15a. Die gezeigte Regelanordung 11a weist nicht wie beim Stand der Technik einen hierarchischen Regleraufbau mit mehreren aufwendigen Regelgliedern auf. Sie weist nur die erste Vektorregleranordnung 15a auf, der entsprechend aufbereitete Sollwerte vom ersten Sollwertgeber 13a zugeführt werden. Der erste Sollwertgeber 13a des Gleichrichters 5a erhält als Eingangsgrößen die Solleistung Ps und die gleichrichterseitig gemessene Gleichspannung Ua. Aus diesen Größen wird innerhalb des Sollwertgebers 13a ein resultierender Strom- und Spannungssollwert ermittelt.

Für den Gleichrichter 5a wird nun davon ausgegangen, daß dieser stets die Solleistung Ps konstant liefern soll. Dies gilt insbesondere für einen vorgegebenen Arbeitsbereich. Mit Hilfe von einem ersten und zweiten Kennliniengeber 17aa,17ba werden in Abhängigkeit von der gemessenen Gleichspannung Ua die Sollwerte für den Strom Isa und für die Spannung Usa erzeugt. Die für den Spannungssollwert Usa gewählte Kurve des ersten Kennliniengebers 17aa zeigt als charakteristisches Merkmal einen bogenförmigen Verlauf am oberen Ende für den Bereich des stationären Betriebs. Diese ergibt sich im wesentlichen aus der Anforderung, daß der Gleichrichter 5a eine Arbeitskennlinie entsprechend der Kurve von Ps = konstant aufweisen soll. Der untere Bereich der Kennlinie ist als VDVOC-Charakteristik (Voltage-Dependent-Voltage-Order-Charakteristik), also spannungsbegrenzend, ausgebildet.

Die Kennlinie des zweiten Funktionsgebers 17ba für den Sollstrom Isa weist im wesentlichen eine VDCL-Charakteristik (Voltage-Dependent-Current-Limitation oder spannungsabhängige Strombegrenzung) auf.

Das vom ersten Sollwertgeber 13a erzeugte Sollwertepaar Usa und Isa wird der ersten Vektorregleranordnung 15a zugeführt und dort mit den Spannungs- und Stromistwerten Ua,Ia in Vergleichern V1a,V2a verglichen. Die resultierenden Regelabweichungen werden einem Addierer Aa zugeführt, dessen Ausgangssignal dem Regelglied 19a zugeführt ist. Dieses stellt an seinem Ausgang das gewünschte Steuersignal αa der Steuervorrichtung 9a des Gleichrichters 5a zur Verfügung.

Der prinzipielle Aufbau der zweiten Regelanordnung 11b für den Wechselrichter 5b ist analog zu dem des Gleichrichters 5a. Eine weitere Beschreibung der zweiten Regleranordnung erübrigt sich daher. Unterschiede liegen in der Anzahl der den Sollwertgebern 13a, 13b zugeführten Werten und in ihren Kennlinien. Aufgrund der Varianz der Eingangsgrößen muß die Kennlinie, insbesondere die VDVOC-Charakteristik, des dritten Kennliniengebers 17ab in seiner Höhe im Endbereich und in seiner Neigung vorgebbar sein. Auch die VDCL-Charakteristik des vierten Kennliniengebers 17bb ist einstellbar. Im Prinzip kann der gleiche Kennliniengebertyp wie beim Gleichrichter 5a zur Anwendung kommen. Wesentlich für den zweiten Sollwertgeber 13b ist, daß auch ein Sollöschwinkel γs vorgegeben ist, der einzuhalten ist.

Die Realisierung der hier gezeigten Anordnung kann herkömmlich als Hardware-Regelung als auch in einem Rechner als Software stattfinden. Bevorzugt werden die Regelanordnungen 11a, 11b mit Hilfe eines Programms und zumindest eines Rechners realisiert.

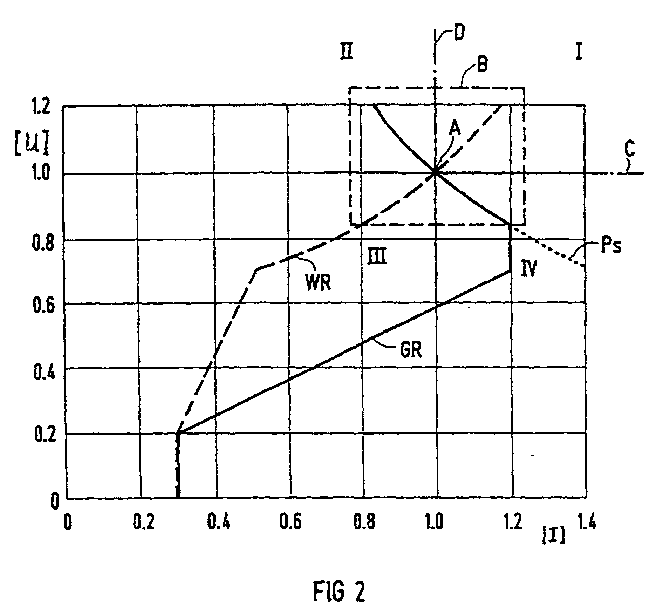

FIG 2 zeigt ein Diagramm mit den Kennlinien der Regelanordnungen 11a, 11b in einer normierten Darstellung, anhand derer die Arbeitsweise der gesamten Anordnung beispielhaft erläutert wird. Auf der Abszisse ist die Spannung bezogen auf die Nennspannung aufgetragen. Die Ordinate weist den Strom bezogen auf seinen Nennstrom auf.

In der folgenden Betrachtung wird zunächst allgemein - ohne Berücksichtigung der gezeigten Kurven - von dem Arbeitspunkt (A) ausgegangen. Wird in den Arbeitspunkt A ein Koordinatenkreuz mit den Achsen C und D gelegt, so werden von diesen Achsen Quadranten I bis IV gebildet. Die Achsen C und D stellen dabei die Charakteristiken eines Strom- bzw. Spannungsreglers, wie aus dem Marginalstromregelverfahren her bekannt, dar.

Jede Änderung der elektrischen Werte am Gleichrichter 5a erzeugt für den Gleichrichter 5a immer eine Istwertänderung in einem der Quadranten I oder III. Für den Wechselrichter 5b hat eine Änderung immer eine Istwertveränderung in einem der Quadranten II oder IV zur Folge.

Wird beispielsweise am Gleichrichter 5a die Drehstromspannung erhöht oder der Steuerwinkel α verkleinert, so wird dadurch der Strom- und Spannungsistwert Ia bzw. Ua im Gleichstromkreis erhöht. Dies hat eine Arbeitspunktverschiebung in Richtung Quadrant I zur Folge.

Wird am Wechselrichter 5b die Drehstromspannung abgesenkt oder der Steuerwinkel verkleinert, so steigt der Strom Ib und die Spannung Ub sinkt. Dies hat eine Veränderung des Arbeitspunkts A in Richtung Quadrant IV zur Folge. Die Quadranten II und III werden bei der entsprechenden Umkehrung der obengenannten Ursachen erreicht.

Ziel der Regelung am Gleich- und Wechselrichter 5a, 5b ist es, nach einem Fehler oder Störungen möglichst schnell und bedämpft den gewünschten Arbeitspunkt wieder zu erreichen. Dabei sind Störungen weitestgehend auszuregeln. Die Stromrichter sollen dabei koordiniert und ohne gegenseitige Behinderung arbeiten.

Das Diagramm zeigt zwei mögliche Kennlinien GR und WR, die bei dem vorliegenden Verfahren zur Anwendung kommen. Die Kennlinie GR des Gleichrichters 5a weist in ihrem oberen Bereich einen hyperbelartigen Ast auf, der seinem Verlauf nach der Hyperbel der Solleistung Ps entspricht. Der Gleichrichter 5a regelt somit die Leistung. Der untere Teil der Kennlinie ist im wesentlichen für das Anfahrverhalten oder bei Fehlerzuständen zuständig. Die Hyperbelcharakteristik der Regelung des Gleichrichters 5a wird dadurch erzielt, daß das Sollwertepaar für Strom und Spannung Usa und Isa in Abhängigkeit des Spannungsistwertes Ua so verändert wird, daß deren Produkt immer die Leistung Ps ergibt. Im übrigen gilt für das Gesamtregelverhalten des Gleichrichters 5a die Beziehung

$$Usa - Ua + Isa - Ia = 0,$$

die im ersten Vektorregler 15a erfüllt wird. Die Gesamtkennlinie GR ergibt sich als Summe der Einflüsse der Kennliniengeber 17aa, 17ba und des ersten Vektorreglers 19a.

Die Charakteristik der Regelung für den Wechselrichter 5b entspricht im Bereich lokal um den Arbeitspunkt der Charakteristik eines Widerstandsreglers im Sinne eines geregelten Verbrauchers. Daraus ergibt sich eine aufsteigende Kennlinie.

Die Wechselrichterkennlinie WR ist analog zum Obengesagten das Ergebnis der in der zugeordneten zweiten Regelanordung 11a vorgesehenen Verfahrensweise.

Um das Ziel einer koordinierten Regelung Rechnung zu tragen, muß die Wechselrichterreglung ein Sollwertepaar für Strom und Spannung haben, das sowohl die eigenen als auch die Ziele des Gleichrichters 5a berücksichtigt. Es muß also der Löschwinkel γ des Wechselrichters 5a geregelt werden und gleichzeitig die Leistung Ps eingehalten werden. Für das Regelverhalten des Wechselrichters 5b gilt analog zu oben die Beziehung

$$- Usb + Ub + Isb - Ib = 0$$

für den zweiten Vektorregler 15b.

Von der am Gleichrichter 5a zur Verfügung gestellten Leistung kommt am Wechselrichter 5b aufgrund der Übertragungsverluste nur eine geringere Leistung, z.B. nur 97 %, an. Für den Wechselrichter 5b gilt die folgende Beziehung:

$$A) \qquad Usb = Ub \frac{\cos(\gamma s) + \sqrt{\cos^2(\gamma s) - \frac{Psb}{Pb}[\cos^2(\gamma) - \cos^2(\beta)]}}{\cos(\gamma) + \cos(\beta)}$$

Der Sonderfall der Beziehung A), bei dem

$$B) \qquad \cos^2(\gamma s) = \frac{Psb}{Pb} \cdot \cos^2(\gamma)$$

ist, ergibt:

$$C) \qquad Usb = \sqrt{\frac{Psb}{Pb}} \cdot Ub$$

Mit Hilfe der Gleichung B) kann für die Istwerte $\gamma$ und P immer

$$D) \qquad \gamma s = \arccos\left[\sqrt{\frac{Psb}{Pb}} \cdot \cos(\gamma)\right]$$

berechnet werden, der den stationären Arbeitspunkt gemäß Beziehung C) gibt. Dieser Sonderfall ist es auch, der bestimmt, mit welchem Löschwinkelsollwert $\gamma s$ gefahren werden muß, um für die Istleistung Pb (die der geregelten Solleistung Psa am Gleichrichter 5a entspricht) einen stationären Arbeitspunkt nach Gleichung C) zu erhalten, bei dem auch noch der Löschwinkelist- und -sollwert $\gamma$ bzw. $\gamma s$ gleich sind.

Um immer nur diesen Arbeitspunkt, bei dem die Solleistung am Gleichrichter und ein minimaler Sollöschwinkel $\gamma min$ eingehalten werden, zu erreichen, wird zu dem nach der Gleichung D) errechneten Löschwinkelsollwert $\gamma s$ die Regelabweichung eines Löschwinkelreglers hinzuaddiert:

$$E) \qquad \gamma se = \gamma s + \gamma s min - \gamma.$$

Ersetzt man in der Gleichung A) den ursprünglichen Sollöschwinkel $\gamma s$ mit $\gamma se$ so ergibt sich:

$$F) \qquad Usb = Ub \cdot \frac{\cos(\gamma se) + \sqrt{\cos^2(\gamma se) - \frac{Psb}{Pb}[\cos^2\gamma - \cos^2\beta]}}{\cos\gamma + \cos\beta}$$

und

$$G) \qquad Isb = \frac{Psb}{Usb}$$

Der mit der Gleichung F) errechnete Spannungssollwert Usb wird mit der Regelabweichung vom Sollöschwinkel $\gamma s$ derart verändert, daß sich der gewünschte Arbeitspunkt einstellt. Aus diesen Überlegungen ergibt sich für den Wechselrichter 5b ein einfaches Regelkonzept, bestehend aus einer Rechenschaltung für die Sollspannung Usb und dem Sollstrom Isb (nach den Gleichungen F) und G)) und einem Vektorregler 15b.

Die hierdurch realisierte koordinierte Vektorregelung reagiert im Fall eines Spannungseinbruchs mit unveränderten Istwerten (für Leistung und Löschwinkel) und verhält sich koordiniert und angemessen auf entsprechende Störungen mit veränderten Istwerten. Das Regelverfahren sucht immer den kürzesten Weg zur Wiederherstellung des neuen Arbeitspunktes.

Die aufgezeigten Beziehungen A) bis G) können ggf. auch unter Berücksichtigung von regelungstechnischen Bedingungen oder Voraussetzungen vereinfacht werden, so daß mit einfacheren Mitteln ein äquivalent wirkendes Ergebnis erzielt wird.

In der FIG 2 sind die aus diesen Überlegungen resultierenden Kennlinien WR und GR gezeigt. Sie schneiden sich dabei im Arbeitspunkt A. Das vorliegende Verfahren bezieht sich in erster Linie auf den gezeigten Bereich B. Der Hyperbelteil der Gleichrichterkennlinie GR verläuft dabei in den Quadranten II und IV, während die Wechselrichterkennlinie in den Quadranten I und III verläuft.

Bei einer Gleichstromübertragung mit Thyristoren stellt der Wechselrichter 5b in der Regel wegen der Komutierungsgefahr das schwächste Glied dar. Daher muß die Regelung des Gleichrichters 5a tolerant und schnell bei wechselrichterbedingten Änderungen, z.B. Spannungsänderungen, reagieren. Die Charakteristik der Regelung für den Gleichrichter 5a nach dem Vektorregelverfahren ist für das Sollwertepaar Usa und Isa im Nennpunkt die Tangente zur zugehörigen Leistungshypherbel der Solleistung PS. Dadurch ergibt sich, daß die Vektorregelung vom Prinzip her Spannungsveränderungen am Wechselrichter 5b toleriert, wenn die verursachten Leistungsänderungen auf der Tangente liegen. Dies ist ein bedeutender Unterschied zum Marginalstromverfahren, das über die unterlagerte Stromregelung sehr stark reagiert. Für den Gleichrichter 5a steht somit ein einfaches Regelkonzept zur Verfügung, das lediglich einen Sollwertgeber 13a für Strom Isa und Spannung Usa und einen Vektorregler 15a umfaßt.

Die Wechselrichterregelungen im Marginalstromverfahren regeln den Löschwinkelregler oder die Spannung oder den Strom. Da die zugehörige unterlagerte Gleichrichterregelung den Gleichstrom in den ersten zwei Wechselrichterregelarten und die Spannung im letzten Fall regelt, kann festgestellt werden, daß die Regelungen der beiden Stromrichter nicht koordiniert arbeiten, sondern jede für sich.

Um dem Ziel einer koordinierten Regelung Rechnung zu tragen, weist das neue Regelverfahren Sollwertepaare für Strom und die Spannung auf, die sowohl die Ziele des Wechselrichters 5b als auch die Ziele des Gleichrichters 5a berücksichtigen. Das Sollwertepaar des Wechselrichters 5b ist also so bestimmt, daß es den Löschwinkel $\gamma$ regelt und gleichzeitig die Leistung Ps einhält, die vom Gleichrichter 5a zur Verfügung gestellt wird. Die erzeugte Regelcharakteristik des Wechselrichters 5b entspricht dabei der Charakteristik eines Widerstandsregelers mit einer positiven Steigung.

Nachfolgend werden die verwendeten Abkürzungen und Bezugszeichen aufgelistet:

| | |
|---|---|
| 1 | HGÜ |
| 3a, 3b | Wechselspannungsnetz |
| 5a | Gleichrichter |
| 5b | Wechselrichter |
| 7 | Gleichstromleitung |
| 8 | Leitungsinduktivität |
| 9a, 9b | Steuereinrichtung |
| 11a, 11b | Regelanordnung |
| 13a, 13b | Sollwertgeber |
| 15a, 15b | Vektorregleranordnung |
| 17aa, 17ba<br>17ab, 17bb | Kennliniengeber |
| 19a, 19b | Regelglied |
| V1,V2 | Vergleicher |
| A | Addierer |
| $\alpha$ | Steuersignal |
| $\beta$ | Voreilwinkel |
| $\gamma$ | Löschwinkel |
| $\gamma$min | minimaler Sollöschwinkel |
| GR | Gleichrichterkennlinie |
| WR | Wechselrichterkennlinie |
| U | Spannung |
| I | Strom |
| P | Leistung |

EP 0 688 081 B1

| _a | Index Gleichrichterwerte |
| _b | Index Wechselrichterwerte |
| _s | Index für Sollwerte |
| B | Bereich um den Arbeitspunkt |
| I, II, III, IV | Quadranten |

**Patentansprüche**

1. Verfahren zum Erzeugen von Steuersignalen ($\alpha$a, $\alpha$b) für Steuereinrichtungen (9a, 9b) von Stromrichtern (5a, 5b) einer HGÜ-Anlage (1), wobei in Abhängigkeit ermittelter Spannungs- und Strom-Istwerten (Ua, Ub, Ia, Ib) und in Abhängigkeit ermittelter Spannungs- und Strom-Sollwerten (Usa, Usb, Isa, Isb) derart jeweils Steuersignale ($\alpha$a, $\alpha$b) generiert werden, daß für den gleichrichterbetriebenen Stromrichter (5a) die Bedingung:

$$Usa - Ua + Isa - Ia = 0$$

und für den wechselrichterbetriebenen Stromrichter (5b) die Bedingung:

$$-Usb + Ub + Isb - Ib = 0$$

erfüllt werden, **dadurch gekennzeichnet, daß** in Abhängigkeit eines gemessenen Gleichspannungs-Istwertes (Ua) des gleichrichterbetriebenen Stromrichters (5a) mittels einer bekannten spannungsabhängigen Strombegrenzungskennlinie ein Strom-Sollwert (Isa) bestimmt wird, daß in Abhängigkeit dieses ermittelten Strom-Sollwertes (Isa) und einer zweiten Kennlinie ein Spannungs-Sollwert (Usa) ermittelt wird, wobei diese zweite Kennlinie derart ausgebildet ist, daß ausgehend von einer zu übertragenen konstanten Leistung (Ps) die Summe der Strom- und Spannungsabweichungen gleich Null ist, und daß ausgehend von einer zu übertragenen konstanten Leistung (Ps) in Abhängigkeit eines gemessenen Gleichspannungs-Istwertes (Ub) des wechselrichterbetriebenen Stromrichters (5b), eines Soll- und Ist-Löschwinkels ($\gamma$s,$\gamma$) und der beiden Kennlinien ein Strom- und Spannungs-Sollwert (Isb, Usb) ermittelt werden, wobei diese beiden Kennlinie nun einstellbare Äste aufweisen.

2. Verfahren nach Anspruch 1, wobei außerhalb des Bereichs (B) die Sollwerte (Usa, Isa; Usb, Isb) für einen Gleichrichter (5a) und den Wechselrichter (5b) der HGÜ-Anlage (1) einer Strom- und/oder Spannungsbegrenzung unterzogen werden.

3. Verfahren nach Anspruch 1 oder 2, wobei außerhalb eines Bereichs (B) um einen stationären Arbeitspunkt (A) die Sollwerte (Isa, Isb) einer spannungsabhängigen Strombegrenzung (VDCOL) unterzogen werden.

4. Verfahren nach Anspruch 1 oder 2, wobei außerhalb eines Bereichs (B) um einen stationären Arbeitspunkt (A) die Sollwerte (Usa, Usb) einer spannungsabhängigen Spannungsbegrenzung (VDVOC) unterzogen werden.

5. Verfahren nach einem der Ansprüche 1 bis 4, wobei für den Wechselrichter (5b) ein Vergleich von Soll- und Istleistung (Psa, Pb) vorgenommen wird und die erzeugte Istwertabweichung zur Erzeugung der Sollwerte (Usb, Isb) dient.

6. Verfahren nach einem der Ansprüche 1 bis 5, wobei die erzeugte Regelcharakteristik für den Gleichrichter (5a) der eines Leistungsreglers und die des Wechselrichters (5b) die eines Widerstandsreglers entspricht.

**Claims**

1. A method of generating control signals ($\alpha$a, $\alpha$b) for control devices (9a, 9b) of power converters (5a, 5b) of a HVDCT-system (1), wherein, as a function of determined voltage- and current actual values (Ua, Ub, Ia, Ib) and as a function of determined voltage- and current setpoint values (Usa, Usb, Isa, Isb), control signals ($\alpha$a, $\alpha$b) are in each case generated such that for the rectifier-operated power converter (5a) the condition:

7

$$Usa - Ua + Isa - Ia = 0$$

is fulfilled and for the inverter-operated power converter (5b) the condition:

$$-Usb + Ub + Isb - Ib = 0$$

is fulfilled, **characterised in that**, as a function of a measured d.c. voltage actual value (Ua) of the rectifier-operated power converter (5a), by means of a known voltage-dependent current limitation characteristic curve, a current setpoint value (Isa) is determined, that as a function of this determined current setpoint value (Isa) and of a second characteristic curve, a voltage setpoint value (Usa) is determined, which second characteristic curve is formed such that, commencing from a constant power (Ps) to be transmitted, the sum of the current- and voltage deviations is equal to zero, and that commencing from a constant power (Ps) to be transmitted, as a function of a measured d.c. voltage actual value (Ub) of the inverter-operated power converter (5b), of a setpoint- and actual extinction angle ($\gamma$s, $\gamma$) and of the two characteristic curves, a current- and voltage setpoint value (Isb, Usb) are determined, which two characteristic curves now have adjustable branches.

2. A method according to Claim 1, wherein, outside the region (B), the setpoint values (Usa, Isa; Usb, Isb) for a rectifier (5a) and the inverter (5b) of the HVDCT-system (1) are subjected to a current- and/or voltage limitation.

3. A method according to Claim 1 or 2, wherein, outside a region (B) around a stationary operating point (A), the setpoint values (Isa, Isb) are subjected to a voltage-dependent current limitation (VDCOL).

4. A method according to Claim 1 or 2, wherein, outside a region (B) around a stationary operating point (A), the setpoint values (Usa, Usb) are subjected to a voltage-dependent voltage limitation (VDVOC).

5. A method according to one of Claims 1 to 4, wherein, for the inverter (5b), a comparison of setpoint- and actual power (Psa, Pb) is performed, and the generated actual value deviation serves for the generation of the setpoint values (Usb, Isb).

6. A method according to one of Claims 1 to 5, wherein the generated control characteristic for the rectifier (5a) corresponds to that of a power controller, and the generated control characteristic of the inverter (5b) corresponds to that of a resistance controller.

**Revendications**

1. Procédé de production de signaux ($\alpha$a, $\alpha$b) de commande pour des dispositifs (9a, 9b) de commande de convertisseurs (5a, 5b) statiques d'une installation de transmission de courant continu haute tension (1), dans lequel on élabore en fonction de valeurs (Ua, Ub, Ia, Ib) réelles de courant et de tension qui sont déterminées et en fonction de valeurs (Us, Usb, Isa, Isb) de consigne de tension et de courant qui sont déterminées respectivement des signaux ($\alpha$a, $\alpha$b) de commande, de manière à satisfaire pour le convertisseur (5a) statique fonctionnant en redresseur, la condition :

$$Usa - Ua + Isa - Ia = 0$$

et pour le convertisseur (5b) statique fonctionnant en onduleur, la condition :

$$-Usb + Ub + Isb - Ib = 0$$

**caractérisé en ce que** l'on détermine en fonction d'une valeur (Ua) réelle mesurée de la tension continue du convertisseur (5a) statique fonctionnant en redresseur une valeur (Isa) de consigne de courant au moyen d'une courbe caractéristique connue de limitation du courant en fonction de la tension, **en ce que** l'on détermine en fonction de cette valeur (Isa) déterminée de courant et d'une deuxième courbe caractéristique une valeur (Usa) de consigne de tension, cette deuxième courbe caractéristique étant constituée, de façon qu'à partir d'une puissance (Ps) constante à transmettre, la somme des écarts de courant et de tension soit égale à zéro et **en ce que** à partir d'une puissance (Ps) constante à transmettre, on détermine, en fonction d'une valeur (Ub) réelle mesurée de tension continu du convertisseur (5b) statique fonctionnant en onduleur, d'un angle d'extinction de consigne et d'un angle d'extinction réel ($\gamma$s, $\gamma$) et des deux courbes caractéristiques, une valeur (Isb, Usb) de consigne de courant et de tension, ces deux courbes caractéristiques comportant alors des branches réglables.

2. Procédé suivant la revendication 1, dans lequel on soumet à l'extérieur du domaine (B) les valeurs (Usa, Isa ; Usb, Isb) de consigne pour un redresseur (5a) et pour l'onduleur (5b) de l'installation (1) de transmission de courant continu à haute tension à une limitation de courant et/ou de tension.

3. Procédé suivant la revendication 1 ou 2, dans lequel on soumet, à l'extérieur d'un domaine (B) autour d'un point (A) stationnaire de travail, les valeurs (Isa, Isb) de consigne à une limitation (VDCOL) de courant en fonction de la tension.

4. Procédé suivant la revendication 1 ou 2, dans lequel on soumet, à l'extérieur d'un domaine (B) autour d'un point (A) stationnaire de travail, les valeurs (Usa, Usb) de consigne à une limitation (VDCOC) de tension en fonction de la tension.

5. Procédé suivant l'une des revendications 1 à 4, dans lequel on effectue pour l'onduleur(5b) une comparaison entre la puissance (Psa, Psb) de consigne et la puissance réelle et on se sert de l'écart à la valeur réelle qui est produit pour élaborer les valeurs (Usb, Isb) de consigne.

6. Procédé suivant l'une des revendications 1 à 5, dans lequel la caractéristique de régulation qui est élaborée pour le redresseur (5a) correspond à celle d'un régulateur de puissance et la caractéristique de régulation qui est élaborée pour l'onduleur (5b) correspond à celle d'un régulateur de résistance.

FIG 1

EP 0 688 081 B1

FIG 2